# EUROPEAN PATENT APPLICATION

(11) **EP 3 021 526 A1**
(43) Date of publication of application: **18.05.2016**
(21) Application number: 15194987.2
(22) Date of filing: 17.11.2015
(51) Int. Cl.: H04L 12/42, H04L 12/24

(54) **DEVICE RECOGNITION AND MANAGEMENT**

(30) Priority: 17.11.2014 US 201462080618 P; 28.10.2015 US 201514925120
(71) Applicant: Panduit Corp, Tinley Park IL 60487 (US)
(72) Inventor: SAHI, Jasleen, Schereville, IN 46375 (US); STIRKICH, Philip, Naperville, IL 60563 (US)
(74) Representative: Morrall, Jonathan Ian McLachlan

(57) **Abstract**

Embodiments of the present invention relate to network management and discovery. In an embodiment, the present invention is a method of detecting and/or managing devices in a Device Level Ring (DLR) network. The method allows a user to obtain a visual representation of a logical ring of a DLR network, accurately and effectively illustrating the presence of physical links between network participants.

## Description

### CROSS-REFERENCE TO RELATED APPLICATIONS

This application claims the benefit of U.S. Provisional Patent Application No.: 62/080,618 filed on November 17, 2014, which is incorporated herein by reference in its entirety.

### FIELD OF INVENTION

The present invention generally relates to the field of electronic device management and recognition, and more specifically, at least some embodiments of the present invention relate to device management and recognition in an industrial automation setting.

### BACKGROUND

Today's communication networks are not only growing in size and complexity but they are also converging across problem domains. One such convergence is occurring in the problem domains of industrial automation networks where there is difficulty in documenting and understanding the physical location and logical connection of the networked equipment. In many cases this documentation is done through manual entry into software spreadsheets or using diagramming tools. Such methods are error-prone and information compiled therethrough can become quickly out of date. This creates a variety of challenges for network technicians and control engineers who are tasked with diagnosing, determining the root causes of, and locating the physical and logical locations of the problem area.

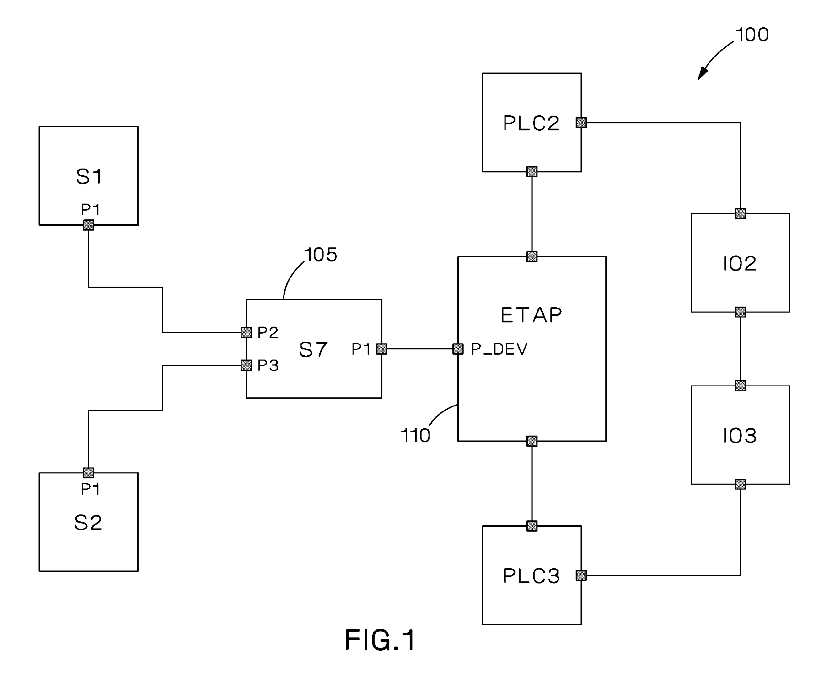

One particular example of the difficulty of managing networked devices occurs in DLR (Device Level Ring) networks. As shown in Fig. 1, a DLR network 100 is typically connected to a local area network switch 105 via an ETAP device 110, includes at least one node configured to be a ring supervisor, and also includes any number of normal ring nodes. It is assumed that all the ring nodes have at least two communication (e.g., Ethernet) ports P1 and P2. This allows a formation of a virtual ring where the supervisor node (e.g., PLC2) is connected to the first node (e.g., IO2), the first node is connected to the second node (e.g., IO3), and so on until the last node (e.g., ETAP) in the ring 100 is connected back to the supervisor node. It is common to have the DLR network nodes communicate via CIP (the Common Industrial Protocol). During normal operation, the active ring supervisor blocks traffic on one of its ports (with the exception of few special frames) and does not forward traffic from one port to other. This configuration avoids a network loop, allowing only one path between any two ring nodes during normal operation while still maintaining two physical connections to any one node. When a fault in the ring is detected, the active ring supervisor reconfigures the network by unblocking traffic on its previously blocked port. This is done because the fault is likely due to a break in the data path between at least some of the nodes, and unblocking the previously blocked port establishes an alternate path to the node(s) that would have otherwise been cut off.

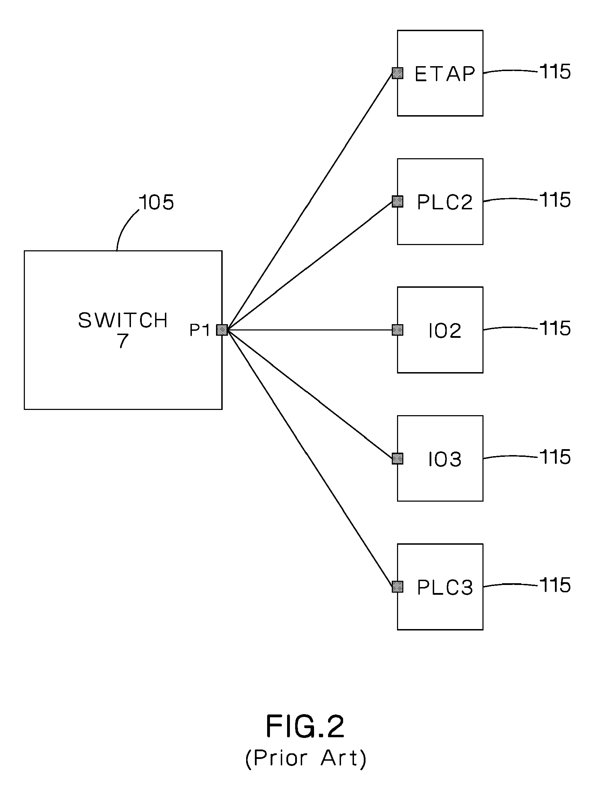

Although this functionality provides a "self-healing" ability, a DLR network can function substantially unaffected with no more than a single fault. Thus, it becomes critically important that any fault existing on the network is remedied quickly. However, current implementations of DLR network management make it difficult to quickly and efficiently locate a fault. For example, Fig. 2 illustrates a customary view of a DLR network as it would be presented by a prior art system. Because this view only provides logical links between a network switch 105 and the DLR devices 115, a fault between any two devices within the DLR network cannot be accurately represented via this view. This creates the need for added resources necessary to diagnose and locate the problem which can result in increased cost and downtime.

Additionally, problems may exist when adding/changing/moving devices in a network, like an industrial automation network. For example, devices may be configured incorrectly and/or connected to incorrect ports on switches.

Accordingly there is a continued need for systems, methods, and apparatuses that can assist users in the management of networked components and troubleshooting of problem areas.

### SUMMARY

At least some embodiments of the present invention are directed towards systems, methods, and/or apparatuses that can assist users in the management of networked components and troubleshooting of problem areas.

In an embodiment, the present invention is a method of detecting and/or managing devices in a Device Level Ring (DLR) network. The method includes the steps of: (i) identifying a switching device connected to the DLR network that includes a port associated with multiple internet protocol (IP) addresses, each of the multiple IP addresses representing a device; (ii) sending a verification query to at least one of the multiple IP addresses to verify a presence of the DLR network and responsively receiving a first DLR object; (iii) extracting an IP address of an active ring supervisor from the first DLR object; (iv) sending a supervisor query to the IP address of the active ring supervisor and responsively receiving an active ring supervisor DLR object; (v) reading a participant list and an order of DLR network participants from the active ring supervisor DLR object, the order representing a connection order in which the DLR network participants are connected to a first port of the active ring supervisor; and (vi) providing a visual representation of a logical ring of the DLR network.

In another embodiment, the present invention is a method of managing a Device Level Ring (DLR) network with a fault, the DLR network including a plurality of DLR network participants and an active ring supervisor, the active ring supervisor including a first port and a second port. The method includes the steps of: (i) sending a supervisor query to an IP address of the active ring supervisor and responsively receiving an active ring supervisor DLR object; (ii) identifying node A, the node A being a last active node on the first port of the active ring supervisor; (iii) identifying node B, the node B being a last active node on the second port of the active ring supervisor; and (iv) providing a visual representation of a logical ring of the DLR network, the visual representation including a depiction of a broken link between the node A and the node B.

These and other features, aspects, and advantages of the present invention will become better-understood with reference to the following drawings, description, and any claims that may follow.

### BRIEF DESCRIPTION OF THE DRAWINGS

Fig. 1 illustrates a schematic representation of an embodiment of a DLR network.
Fig. 2 illustrates a known way to visually represent a DLR network.
Fig. 3 illustrates a flow chart representative of a network discovery and/or management method according to an embodiment of the present invention.
Fig. 4 illustrates a table representative of a database of discovered devices according to an embodiment of the present invention.
Fig. 5 illustrates a list of attributes of a DLR object according to an embodiment of the present invention.
Fig. 6 illustrates a list of attributes of a DLR object of an Active Supervisor according to an embodiment of the present invention.
Fig. 7 illustrates a schematic representation of a DLR network, according to an embodiment of the present invention.
Fig. 8 illustrates a schematic representation of a DLR network, according to another embodiment of the present invention.
Fig. 9 illustrates exemplary MAC tables for two of the devices shown in the view of Fig. 8.
Figs. 10A and 10B illustrate a flow chart representative of a network discovery and/or management method according to another embodiment of the present invention.
Fig. 11 illustrates a schematic representation of a DLR network, according to another embodiment of the present invention.
Fig. 12 illustrates a list of attributes of a DLR object of an Active Supervisor according to another embodiment of the present invention.
Fig. 13 illustrates a schematic representation of a DLR network, according to another embodiment of the present invention.
Figs. 14A and 14B illustrate a flow chart representative of a network management method according to another embodiment of the present invention.
Fig. 15 illustrates a block diagram of a system according to an embodiment of the present invention.

### DETAILED DESCRIPTION

While the following embodiment(s) will be described with reference to an industrial automation environment, this should not be interpreted as limiting the present invention in any way, and other embodiments may be used in other environments where the implementation of the present invention may be feasible and/or where challenges similar to those found in the industrial automation environment exist.

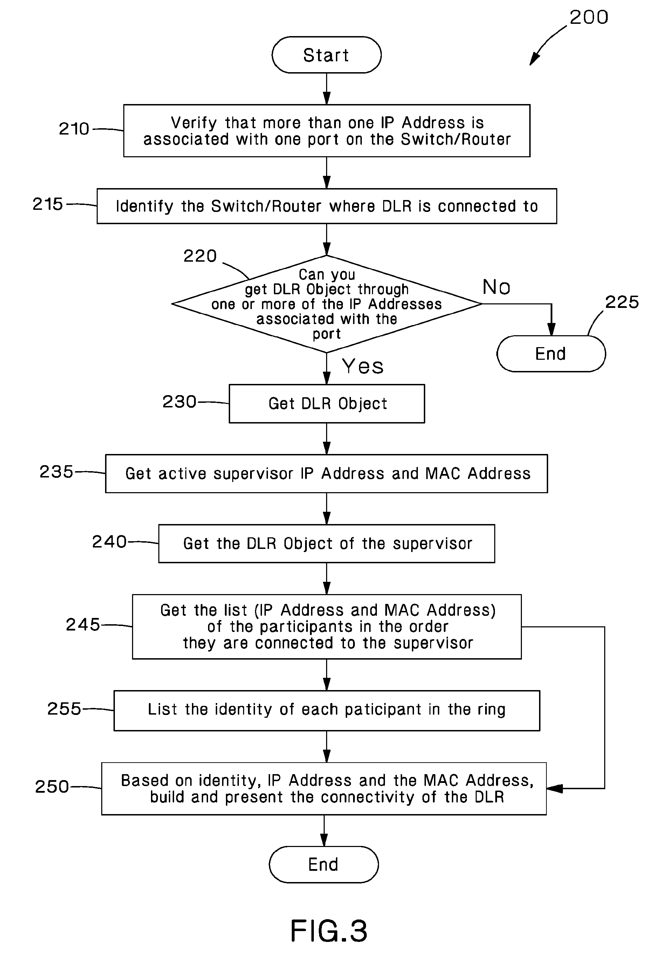

Referring now to Fig. 3, said figure illustrates a flow chart representative of a method/process 200 of managing a DLR (Device Level Ring) network in accordance with an embodiment of the present invention. Prior to the start of the management process 200, device discovery is performed in order to obtain information about devices present on the network. This can be done by specifying a range of IP (Internet Protocol) addresses, querying each of those addresses to see if a response may be obtained, and recording the presence of a device for every IP address query that receives a response. As part of the response, an electronic device may transmit information about itself, including its MAC (Media Access Control) Address, and its port connectivity status whereby the port connectivity provides information related to at least one of the device's ports and what, if any, devices are connected thereto. Discovery may, for example, be a fully automated or a semi-automated process, and may be performed pursuant to SNMP (the Simple Network Management Protocol). Because these and other discovery techniques are well-known to those of ordinary skill in the art, no detailed discussion on its functionality or other means of discovering network devices is warranted.

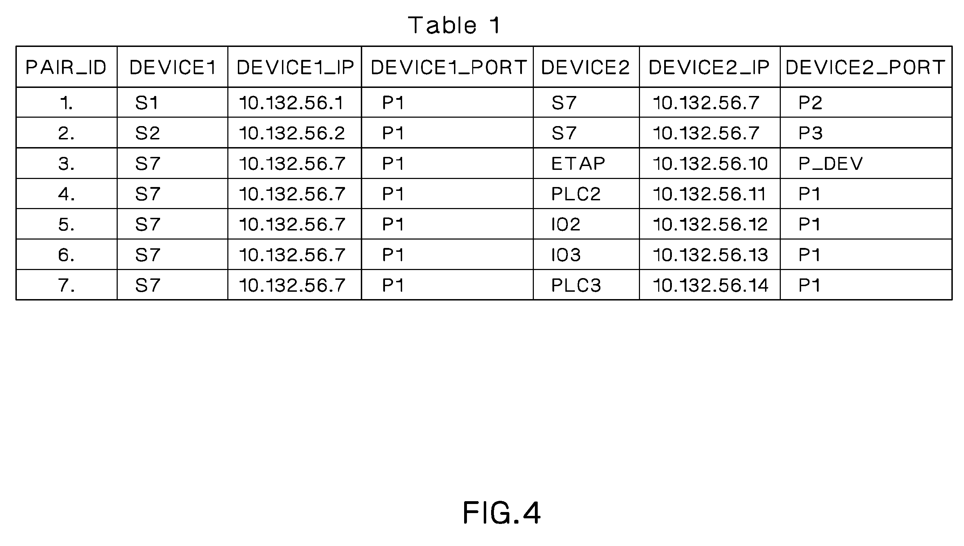

Upon the execution of network device discovery, a database of existing network devices and their corresponding attributes is compiled. An example of such a database compiled after executing network discovery on the network of Fig. 1 is illustrated in Table 1 of Fig. 4. In Table 1: the PAIR_ID column is a numerical device-pair identifier; the DEVICE1_IP column identifies the IP address of the discovered device; the DEVICE1 column identifies the name of the discovered device; the DEVICE1_PORT column identifies a port name on which a secondary device appears; the DEVICE2 column identifies the name of the secondary device; the DEVICE2_IP column identifies the IP address of the secondary device; and the DEVICE2_PORT column identifies a port name of the secondary device which is used to connect to the discovered device. Note that in the currently described embodiment the network discovery which compiles the information for Table 1 is executed pursuant to the SNMP protocol. Because the DLR nodes are likely to communicate via CIP or lack the ability to provide connectivity information even if they are SNMP-enabled, no extended port connectivity information is likely to be present for those nodes in Table 1.

Once the discovery information is compiled into the database of Table 1, the DLR network management process 200 begins by identifying any switches/routers that have at least one port associated with multiple IP addresses in step 210. This is done because a DLR network includes more than one device. Thus, any switch/router that does not have at least one port associated with multiple IP addresses will not be connected (at least directly) to a DLR network, and further interrogation of that switch/router will not be necessary. In the presently described embodiment, each of the switches S1 and S2 has one port (P1) associated with only one device (S7), and switch S7 has one port (PI) associated with five devices (ETAP, PLC2, IO2, IO3, and PLC3).

While the association of multiple IP addresses on a single port will indicate a plurality of devices connected thereto, that alone will not signal the presence of a DLR network. To make that determination in steps 215, 220 a query is made to one or more of the multiple IP addresses (and accordingly to the device(s) having respective IP address(es)) associated with switch/port in question (in this case S7/P1) querying for a DLR object which is a logical entity that resides in a CIP adapter of a DLR device. The query can be based on a Class Code of a DLR object (e.g., 0x47) and a request for all the attributes associated with a device's Service Code. Thus, for example, a query to a device having the IP address of 10.132.56.14 may include the following function: SendUnConnectedRequest ((EtIPObjectRequest(10.132.56.14, 47, 1)). The functions SendUnConnectedRequest and EtIPObjectRequest are a part of the CIP implementation library done by a third party.

If the device being interrogated is a DLR device, its response to the aforementioned query will return the device's DLR object and such a response could signify a presence of a DLR network. The DLR object may have many attributes, as detailed in the CIP Specification [Common Industrial Protocol (CIP™) Edition 3.11, November 2011, THE CIP NETWORKS LIBRARY Volume 1; EtherNet/IP Adaptation of CIP Edition 1.15, April 2013, THE CIP NETWORKS LIBRARY Volume 2], which is incorporated herein by reference in its entirety. However, only some of those attributes are necessary. For example, in an embodiment the necessary attributes are: (1) Network Status; (2) Active Supervisor Address; (3) Last Active Node on Port 1; (4) Last Active Node on Port 2; (5) Ring Protocol Participant Count; and (6) Ring Protocol Participant List. Note that some steps of the currently described methods may necessitate the evaluation of only some of the attributes.

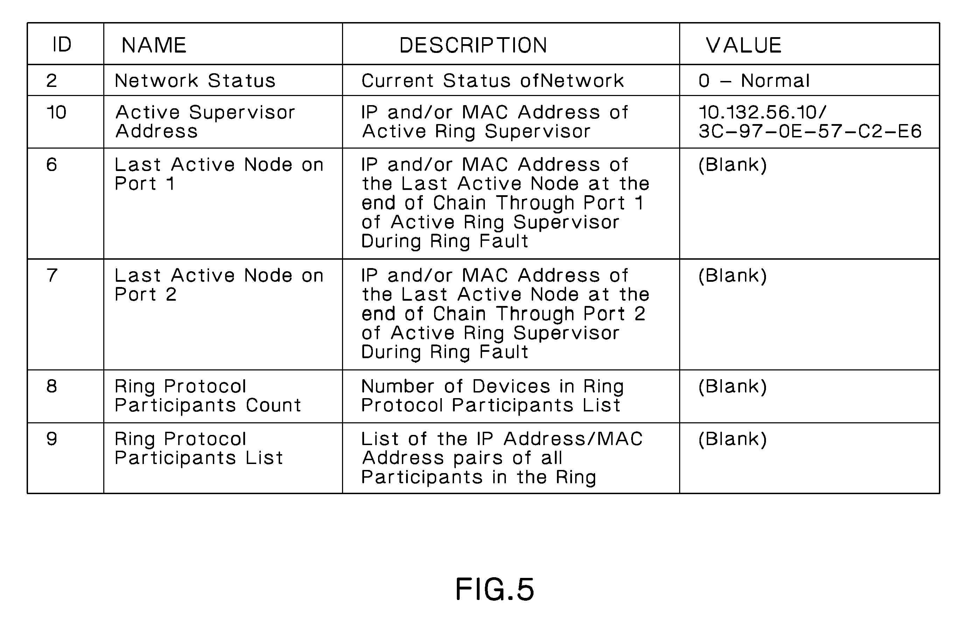

Referring back to Fig. 3, if the query of step 220 fails to elicit a response with a DLR object, the device at the interrogated IP address may be considered to be a non-DLR device and the process may be ended for the particular switch port in step 225. Alternatively, a DLR object is obtained in step 230. Continuing with the example of querying a device located at IP address 10.132.56.14, the DLR object returned in response could include attributes outlined in Fig. 5.

Next it is necessary to determine the DLR network participants. This can be done by evaluating the DLR object (and in particular the Ring Protocol Participant List attribute) of an Active Ring Supervisor. A Ring Supervisor is a device capable of implementing required ring supervisor behaviors, including, maintaining a loop-free topology by blocking port 2 of the embedded-switch device until a fault is detected. Accordingly, it is necessary to obtain the IP address and the MAC address of the Active Ring Supervisor as shown in step 235 of Fig. 3.

The IP address and the MAC address of an Active Ring Supervisor can be acquired from the Active Supervisor Address attribute of a DLR object which is obtained from any of the DLR network participants. Thus, in case of the PLC3, which is located at IP address 10.132.56.14 and whose DLR object attributes are outlined in Fig. 5, one may determine that the Active Supervisor has an IP address of 10.132.56.10 and has a MAC address of 3C-97-0E-57-C2-E6.

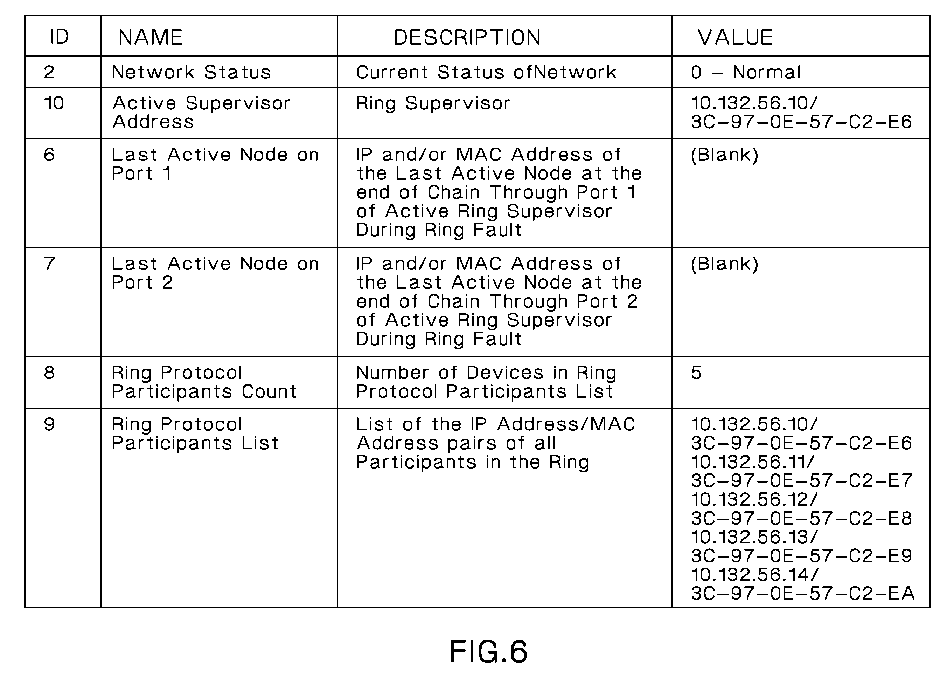

Once the address of the Active Supervisor is established, it is possible to query the Active Supervisor, as shown in step 240 in Fig. 3, to obtain its DLR object. An exemplary reply to the query of a device located at IP address 10.132.56.10 is shown in Fig. 6. From here, a list of the DLR network participants may be obtained (step 245 in Fig. 3) from the Ring Protocol Participant List attribute. Each respective participant's IP address and MAC address are provided. Furthermore, the order in which the participants appear is the order in which they are connected to port 1 of the Supervisor. In the present case, the device located at IP address 10.132.56.10 is connected to a device located at IP address 10.132.56.11; the device located at IP address 10.132.56.11 is connected to a device located at IP address 10.132.56.12; and so on (note that while device located at IP address 10.132.56.14 is connected to a device located at 10.132.56.10, traffic is blocked on this connection during normal operation because this is a link to port 2 of the Supervisor).

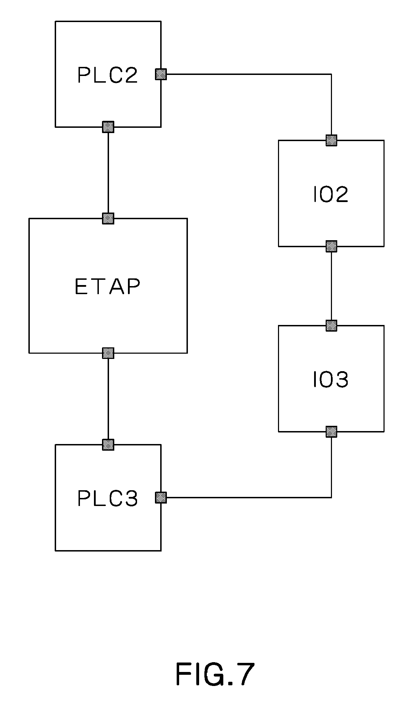

Since the participant list provided by the Ring Supervisor lists the participating devices in the order of being connected to said supervisor, it is possible to use that order to visually reconstruct the logical ring of the DLR network, as shown in step 250 in Fig. 3 and Fig. 7.

To enhance the reconstructed view, it is possible to query each of the ring participants (step 255 in Fig. 3) and use the responses from the query to provide additional device information. For example, an Identity object can be requested for each participant in the list. The Identity object provides identification of and general information about the device in question, and is typically present in CIP-enabled products. The Identity object has many attributes of which the following may be of particular use: Vendor ID, Device Type, and Product Code. The Vendor ID attribute identifies a specific vendor (e.g., Allen-Bradley); the Device Type attribute provides an indication of a general type of a product (e.g., Communication Adapter); and the Product Code provides an identification of a particular product of an individual vendor (e.g., 1783-ETAP). As an example, to obtain the Identity object of the ETAP residing at IP address 10.132.56.10 the following function may be used: SendUnConnectedRequest ((EtIPObjectRequest(10.132.56.10, 1, 1)).

The combination of these three attributes (Vendor ID, Device Type, and Product Code) creates a unique key which may be used as a reference to obtain further information about a particular device. In an embodiment, a database is pre-populated with combinations of these three attributes and associated image of the respective device. For example, Vendor ID = 1; Device Type = 12; Product Code = 203 is associated with a JPEG/PNG image of a 1783-ETAP. Accordingly, when providing a visual representation of the DLR network in step 250, corresponding JPEG/PNG images may be used to provide further clarity and detail regarding the discovered network. Note that the association with a pictorial image is merely exemplary and association with any other piece of information may be implemented as best suited for a particular application.

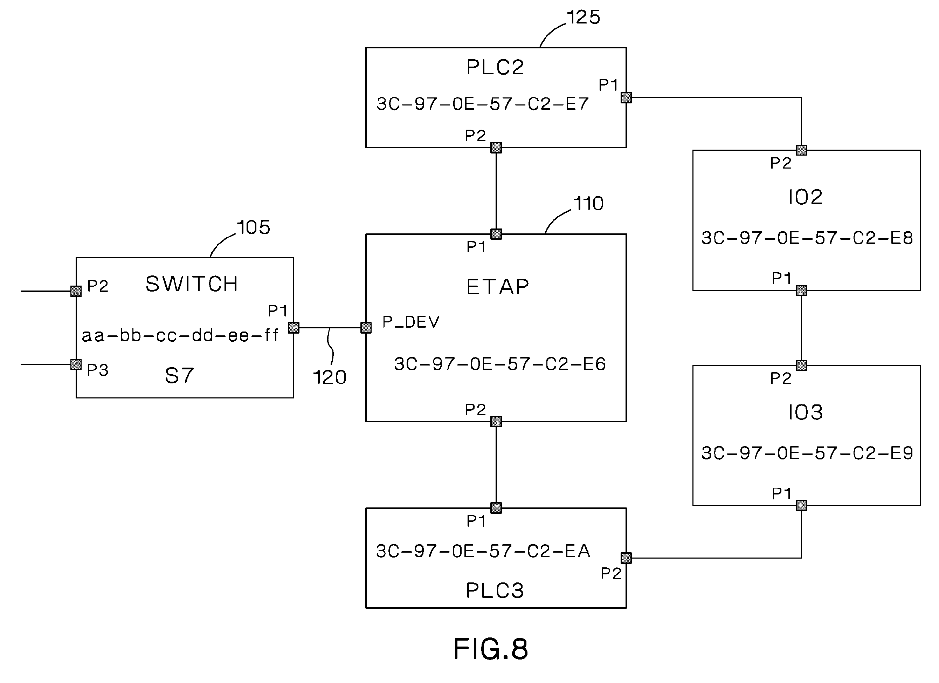

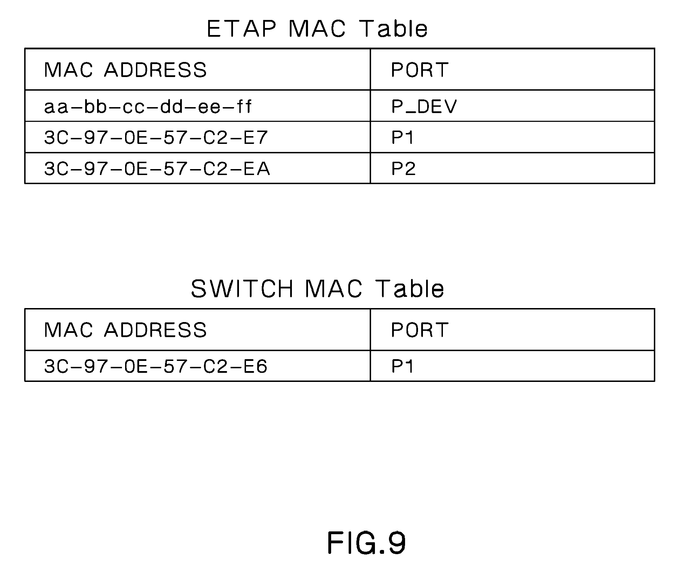

It is further possible to visualize how the DLR network is connected to the rest of the LAN. This can be done with reference to the MAC tables within the DLR devices and/or the MAC table of the switch/router through which the DLR network is connected to the greater LAN (note that the MAC address of said switch/router will have been discovered during the initial discovery process and those of ordinary skill will be well aware of the techniques used to obtain such an address). A MAC table of a device maps any local port to the MAC address of a device connected to the remote end of a communication cable emanating from the respective port. For example, Fig. 8 shows how a SWITCH device 105 and an ETAP device 110 are connected by a communication cable 120; and Fig. 9 illustrates respective MAC tables for the ETAP device 110 and the SWITCH device 105. In an embodiment, the positioning of the link between the DLR network and the greater LAN is determined by reviewing the SWITCH device MAC Table and noting the MAC address associated with the port to which the DLR network is connected to (in this case port PI) is 3C-97-0E-57-C2-E6. Next, the noted MAC address (3C-97-0E-57-C2-E6) is located in the list of the DLR network participants (originally obtained from the Active Supervisor as shown in Fig. 6), and a link is thereby established between the SWITCH device 105 and a respective DLR network participant having a MAC address of 3C-97-0E-57-C2-E6 (and an IP address of 10.132.56.10 as shown in the "Ring Protocol Participant List" in Fig. 6). In the present case, since the ETAP resides at IP address 10.132.56.10, the link is established between the SWITCH device 105 and the ETAP device 110.

To further refine the link and determine which port on the DLR device (in this case the ETAP) is connected to the SWITCH device 105, the MAC table of the respective DLR device (in this case the MAC table of the ETAP) is reviewed. Referring to the ETAP MAC Table shown in Fig. 9, one can determine that the MAC address of the SWITCH device 105 (aa-bb-cc-dd-ee-ff) appears on port P_DEV. Thus, the link provided between the SWITCH device 105 and the ETAP device 110 connects to the ETAP device 110 on its port P_DEV.

The same/similar use of MAC tables within each of the DLR participants may be used to further refine the visualized DLR network and provide port connectivity information. For example, the MAC table of the ETAP 110 may show that its port P1 is connected to a device having a MAC address 3C-97-0E-57-C2-E7, which belongs to PLC2 125 having an IP address of 10.132.56.11. Next, reviewing a MAC table (not shown) of PLC2 125, one may look for the port which is connected to the ETAP. Thus, for example, the PLC2's MAC table may reveal that its port P2 is connected to a device having a MAC address 3C-97-0E-57-C2-E6 of the ETAP 110. Accordingly, a link can be established between ports P1 of the ETAP 110 and port P2 of the PLC2 125.

The aforementioned determinations of the DLR network and the actual links between the DLR participants may be visually represented to a user via any suitable graphical user interface and/or any pictorial representation suitable for the user's application. Such a representation may appear as a figure shown in Fig. 8 where links between the DLR network participants represent actual links as they exist in the physical network. In other words, the representation provided in Fig. 8 differs from that of Fig. 2 by providing an accurate representation of the connections which exist between the DLR network nodes.

Upon obtaining the representation shown in Fig. 8, it may further be possible to manage the DLR network devices and/or provide useful information related to the network's status.

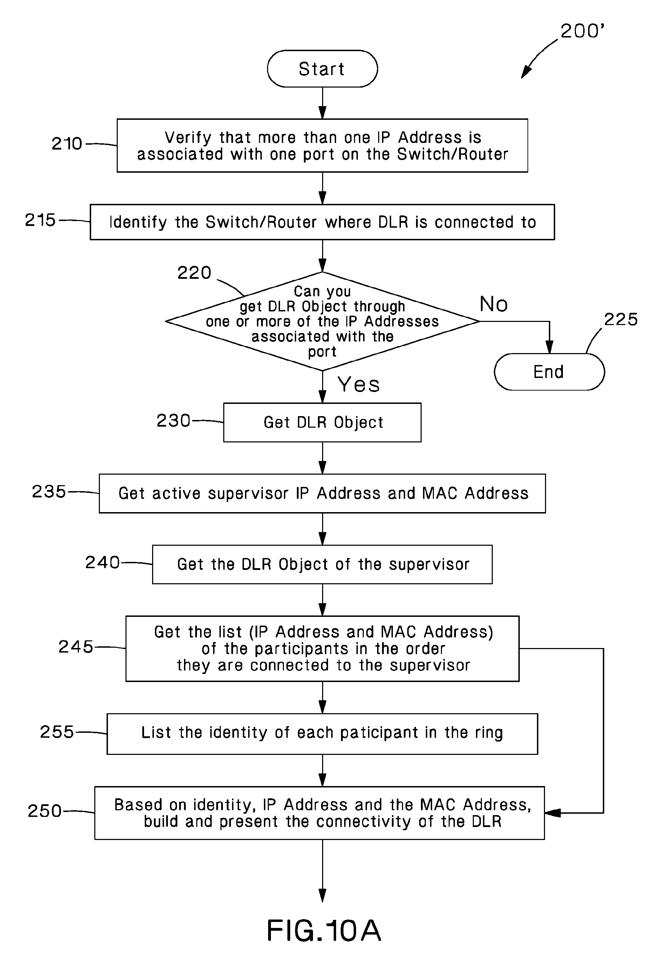

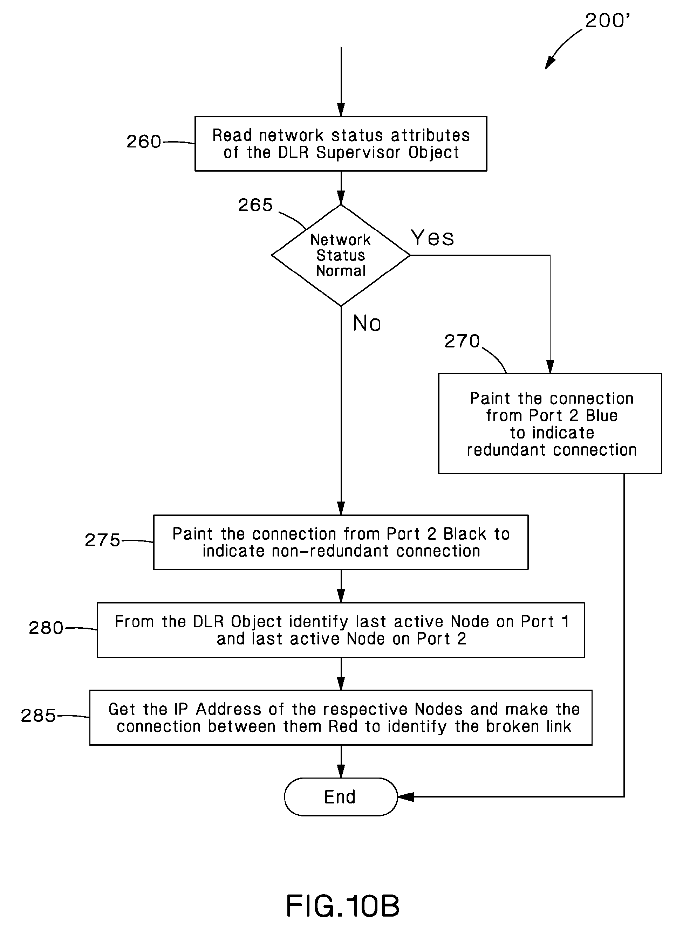

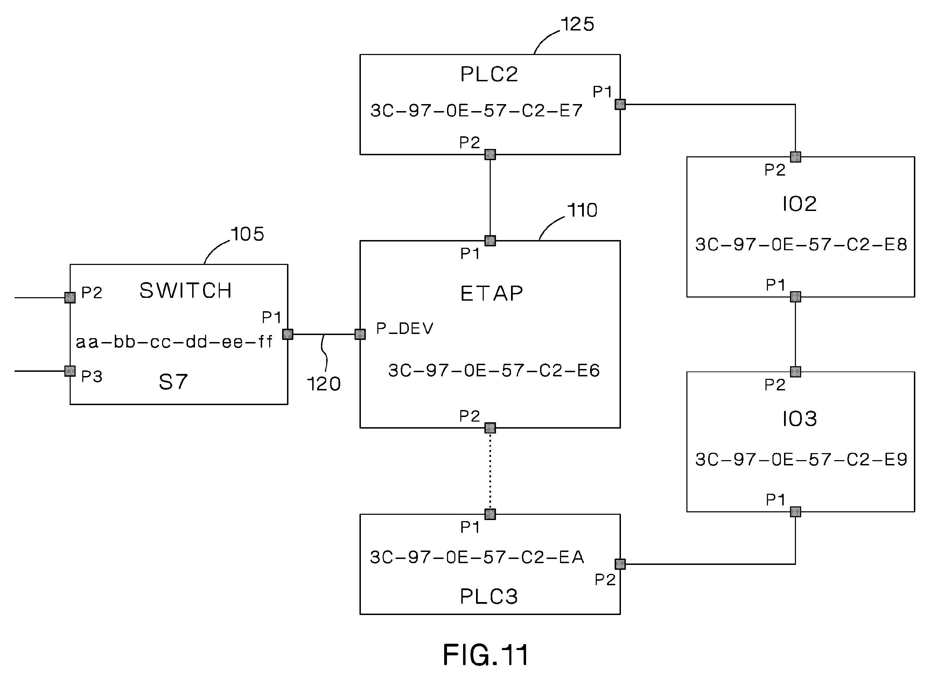

Figs. 10A and 10B illustrate a flow chart representative of a method/process 200' of managing a DLR network in accordance with another embodiment of the present invention. Steps 210 - 255 are the same as those in the flow chart of Fig. 3, and thus will not be recited again. As per the CIP Specification, a Network Status attribute is part of the Active Supervisor's DLR object (as shown in Fig. 6). This attribute provides an indication of the current network status with normal operation and abnormality/fault operation being at least some of the indicators. In step 260 this attribute is read from the Active DLR Supervisor and in step 265 it is evaluated. If the network operation status is indicated as being normal, the physical connection between the second port of the Active Supervisor and a respective DLR participant is considered to be redundant. This is the case because under normal operation traffic on port 2 of the Supervisor is blocked. Accordingly, the redundancy of the physical link can be indicated to the user by, for example, shading the corresponding link (step 270) in the diagram of Fig. 8 a particular color such as blue. The resulting diagram is shown in Fig. 11 where the shaded link is represented via a dotted line. If, however, the network operation status is indicated as having some fault, it is beneficial to provide the user with information to help identify where the fault may be occurring or had occurred.

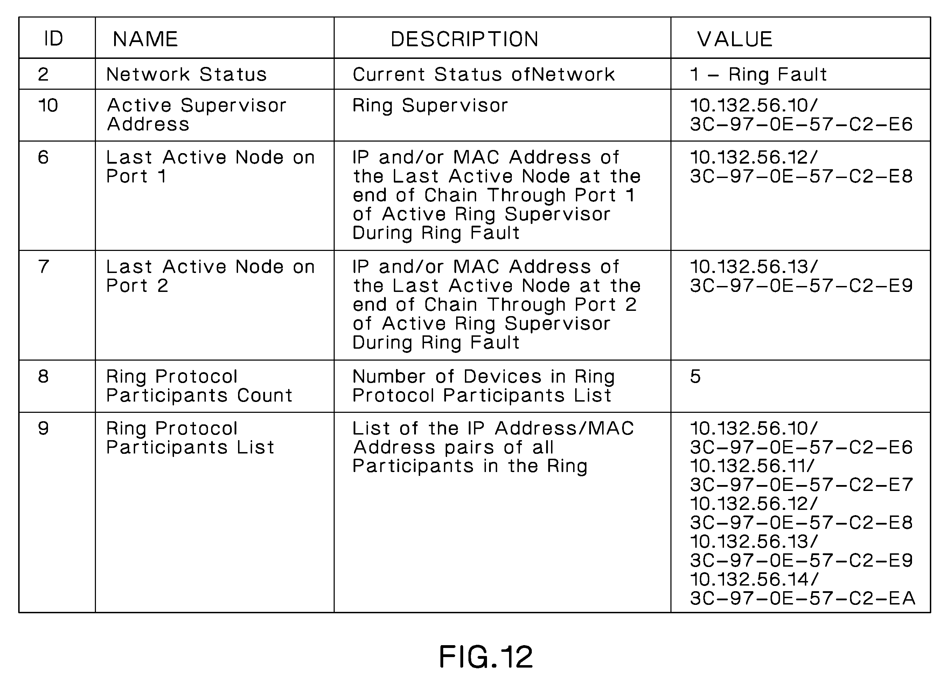

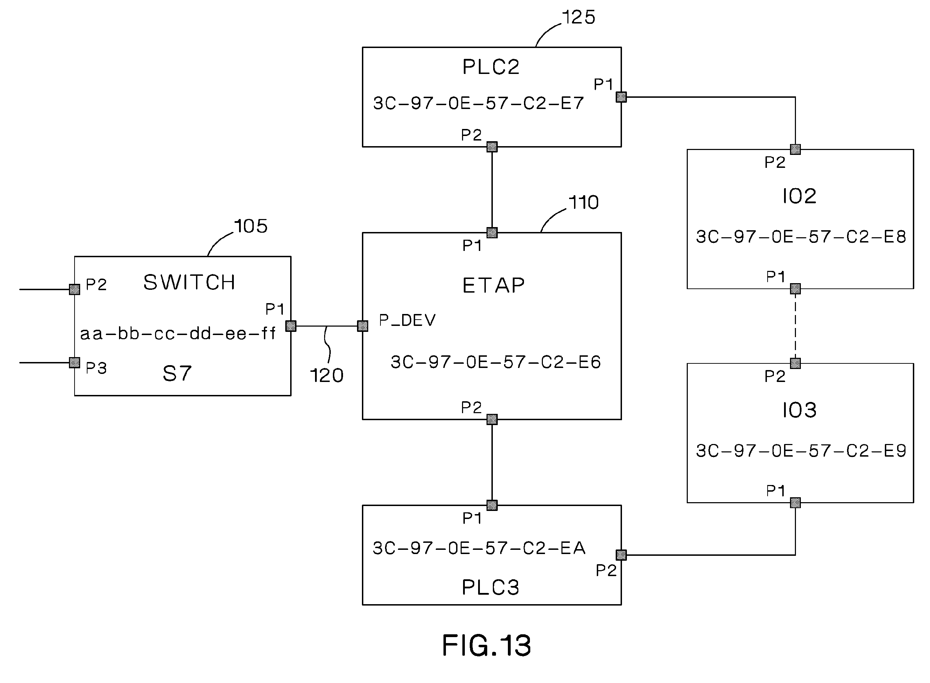

Since when a DLR network detects a fault the Active Supervisor's DLR object will include information that is different from what is shown in Fig. 6, an example of a DLR object of an Active Supervisor operating in a faulty network is provided in Fig. 12. As previously noted, upon detecting the presence of a fault the Active Super unblocks its port 2, allowing network traffic to flow through and making the previously redundant link a necessary one. To represent this to the user, in step 275 of Fig. 10B the link between port 2 of the Supervisor and a respective network participant may be shaded the same color as all other active links. As shown in Fig. 12, upon the presence of a network fault, the DLR object of the Supervisor records the IP and MAC addresses of the last active nodes at the end of a chain through ports 1 and 2 thereof. These values are respectively recorded in the "Last Active Node on Port 1" and "Last Active Node on Port 2" attributes. Reading these values in step 280 provides a basis for determining where a break in the chain may have occurred. Since in the present case network traffic on port 1 of the Supervisor cannot travel past a node located at IP address 10.132.56.12 and likewise network traffic on port 2 of the Supervisor cannot travel past a node located at IP address 10.132.56.13, the connection between those two nodes is likely to have experienced a fault. Accordingly, in step 285 the presence of said fault may be represented to a user by, for example, shading the faulty link in a network diagram a particular color such as red. An example of such a representation is shown in Fig. 13 with the red color being represented by a dashed line. This representation may be advantageous in multiple ways, including being able to convey rather quickly and efficiently where a network fault may have occurred.

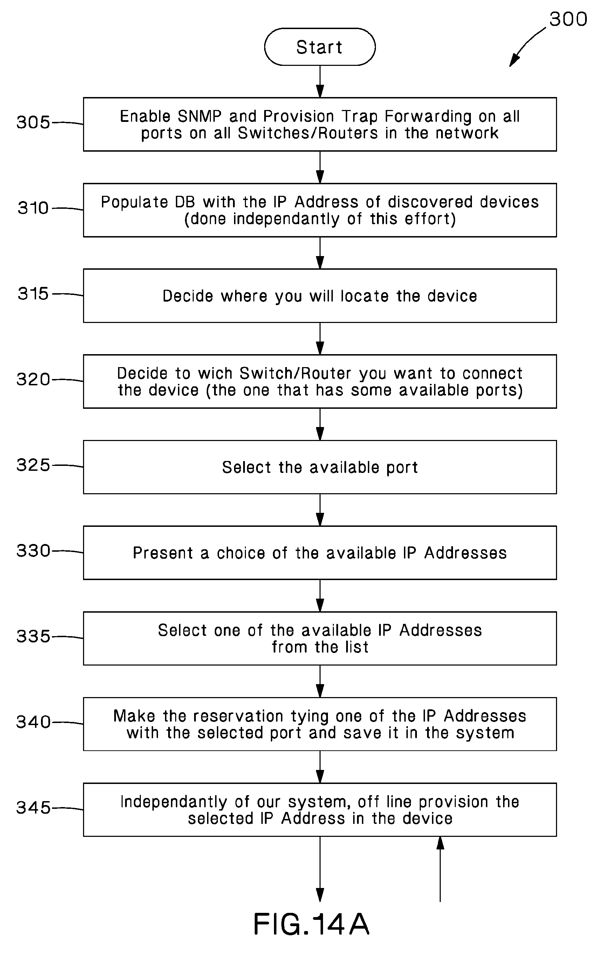

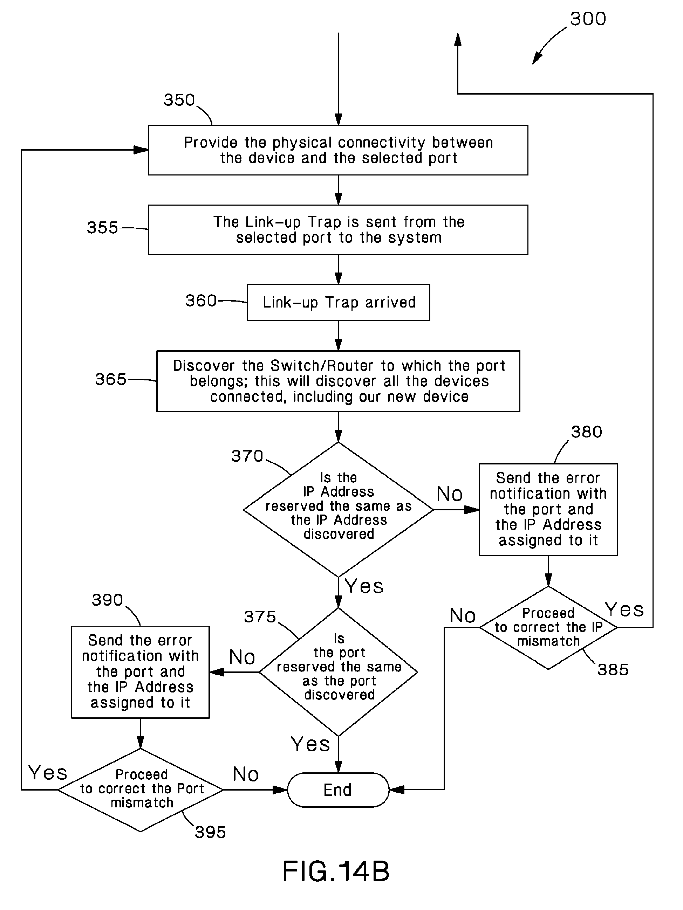

In another embodiment, a system in accordance with the present invention is capable of reserving specific IP addresses for specific ports on a managed switch/router in anticipation of hardware installations. Figs. 14A and 14B illustrate a flow chart representative of a method/process 300 of port and IP address reservation in accordance with another embodiment of the present invention.

In step 305, the system approaches at least some of the managed switches/routers on a given network enabling SNMP thereon as well as provisioning the trap destination for any traps. This is done because in an SNMP management paradigm a concept of an SNMP manager and an SNMP agent is used. An SNMP agent is an application that resides on a device (that is managed) and is able to respond to the requests from the SNMP manager to provide certain information pertaining to said device. In addition, the SNMP agent asynchronously requests attention from the SNMP manager in the event the device is in some sort of an alarming condition. Conversely, the SNMP manager resides on the network and is able to request certain information from the SNMP agents that it manages and is able to handle the asynchronous requests (SNMP traps) from the SNMP agents. Furthermore, the SNMP protocol on a SNMP-supported device can be either enabled or disabled. Accordingly, for an SNMP agent to be functional the SNMP protocol should be enabled, and to retrieve any traps and query data from the managed device the trap destination should be provisioned. In the currently described embodiment step 305 is performed on all ports of all switches/routers in the network of particular interest.

Next, a database of previously discovered IP addresses is compiled in step 310. The actual discovery of network devices can be done independent of the process 300; for example it may be performed at the beginning of bringing up of the network. Furthermore, rerunning the discovery process may not be necessary with each device change. As explained in the subsequent text, when a device is added to the network, a mechanism to discover only the added device is triggered through an SNMP link-up trap. A similar process is followed when a device is removed from the network. As a result, the database of discovered devices (and thus available and unavailable IP addresses) may be kept up-to-date with each move/add/change in the network.

In step 315 a decision is made where to position a to-be-installed device, in step 320 an appropriate switch/router is identified to which the to-be-installed device will be connected to, and in step 325 an available port on the selected switch/router is chosen. After selecting the desired port, the system presents a choice of available IP addresses in step 330 and a selection of one of the available IP addresses is made in step 335. In an embodiment, steps 315 - 335 may be facilitated by a graphical user interface with the assistance of pictorial representations, buttons, menus, prompts, lists, wizards, and/or any other user interface feature found in commonly-used graphical user interfaces.

At this point, since both the selected port and the selected IP address are known, a reservation and correlation of the selected IP address and the selected port is made in the system's database in step 340. Additionally, since the selected IP address of the to-be-installed device is known at this stage, said device is programmed (typically off-line) with the necessary parameters including the selected IP address. This may be done in step 345 via any suitable interface, including a command line interface or a web interface.

Once the to-be-installed device has been programmed, physical connectivity between the device and the network is provided in step 350. This connectivity is made specifically between the device and the port that was selected in step 325. As soon as the connectivity is provided, in step 355 the SNMP link-up trap signals to the system that a link between the device and a corresponding port has been established. Upon the arrival of the trap in step 360, the system initiates a discovery of the switch/router to which the newly installed device has been connected to, discovering all attached devices and their respective connectivity parameters in the process in step 365.

If the discovery process reveals that the newly installed device has the previously selected IP address (step 370) and that the device has been connected to the previously reserved port (step 375), process 300 is completed. If it is discovered that the IP address of the newly connected device does not match the IP address selected in step 335, an error notification with the port number of the connected device and the discovered IP address is sent to the system in step 380. The user may have a choice in step 385 to either proceed with the mismatch or to correct the problem. If no correction is chosen, the process is completed. Alternatively, the process returns to step 345 to reconfigure the to-be-installed device. Likewise, if it is discovered that the newly connected device is connected to a port that is different from the port that was reserved in step 325, an error notification with the incorrect port number of the connected device and the device's IP address is sent to the system in step 390. The user may have a choice in step 395 to either proceed with the mismatch or to correct the problem. If no correction is chosen, the process is completed. Alternatively, the process returns to step 350 to reconfigure the connectivity between the device and the network.

The port and IP address assignment and reservation process 300 may allow the system to assist in actively verifying that a new device connected to a selected port has the correct IP address and is connected to the correct port. As such, this may be helpful in detecting incorrectly configured and/or connected devices relatively early in the installation process.

Embodiments of the present invention may reside in the network infrastructure management system for a plant wide industrial network, and may be implemented at least partially in software in combination with hardware and/or firmware. For example, the subject matter described herein can be implemented in software executed by a processor. In one exemplary implementation, the subject matter described herein can be implemented using a non-transitory computer readable medium having stored thereon computer executable instructions that when executed by the processor of a computer control the computer to perform steps of a method or process. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms. Devices embodying the subject matter described herein may be manufactured by any means, such as by semiconductor fabrication or discreet component assembly although other types of manufacturer are also acceptable, and can be manufactured of any material, e.g., CMOS.

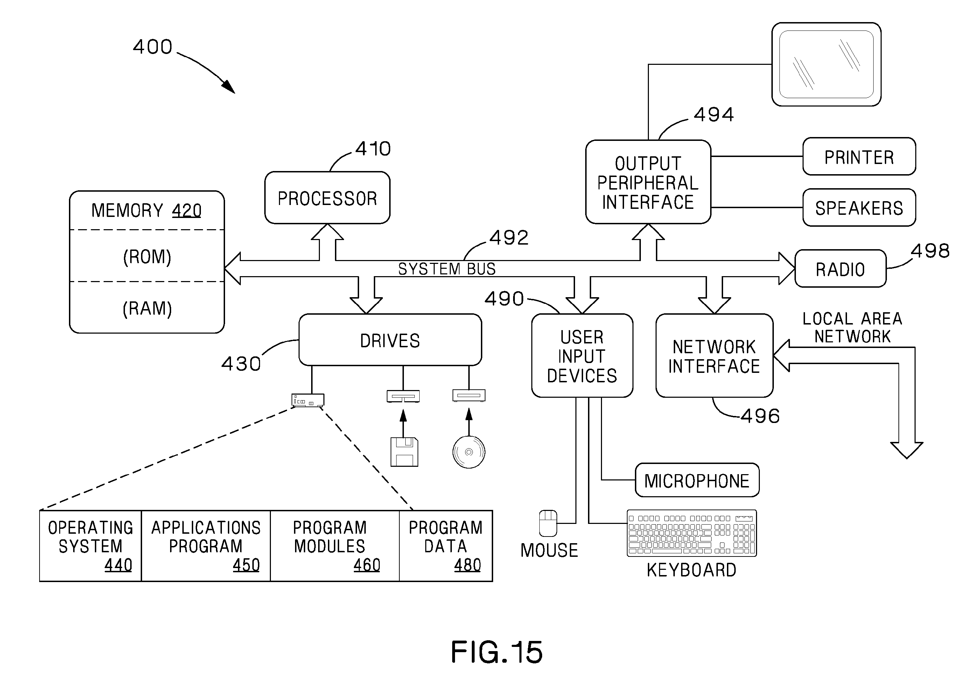

With reference to Fig. 15, depicted is an exemplary computing system for implementing at least some embodiments. Fig. 15 includes a computer 400, which may be a stationary device or a portable device, wherein at least some or all of its components are formed together in a single device which can be carried around by a person. The computer 400 includes a processor 410, memory 420, and one or more drives or storage devices 430. Storage devices 430 include any device capable of storing data, information, or instructions, such as: a memory chip storage including RAM, ROM, EEPROM, EPROM or any other type of flash memory device; a magnetic storage devices including a hard or floppy disk, and magnetic tape; optical storage devices such as a CD-ROM disc, a BD-ROM disc, and a BluRay™ disc; and holographic storage devices.

The storage devices 430 and their associated computer storage media provide storage of computer readable instructions, data structures, program modules and other information for the computer 400. Storage devices 430 can include an operating system 440, application programs 450, program modules 460, and program data 480. Computer 400 further includes input devices 490 through which data may enter the computer 400, either automatically or by a user who enters commands and data. Input devices 490 can include an electronic digitizer, a microphone, a camera, a video camera, a keyboard and a pointing device, commonly referred to as a mouse, trackball or touch pad. Other input devices may include a joystick, game pad, satellite dish, scanner, and the like. In one or more embodiments, input devices 490 are portable devices that can direct display or instantiation of applications running on processor 410.

These and other input devices 490 can be connected to processor 410 through a user input interface that is coupled to a system bus 492, but may be connected by other interface and bus structures, such as a parallel port, game port or a universal serial bus (USB). Computers such as computer 400 may also include other peripheral output devices such as speakers and/or display devices, which may be connected through an output peripheral interface 494 and the like.

Computer 400 also includes a radio 498 for wirelessly transmitting and receiving data for the computer 400 with the aid of an antenna. Radio 498 may wirelessly transmit and receive data using WiMAX™, 802.11a/b/g/n, Bluetooth™, 2G, 2.5G, 3G, and 4G, wireless standards.

Computer 400 may operate in a networked environment using logical connections to one or more remote computers. The remote computer may be a personal computer, a server, a router, a network PC, a peer device, or other common network node, and may include many if not all of the elements described above relative to computer 400. Networking environments are commonplace in offices, enterprise-wide computer networks, intranets and the Internet. For example, in the subject matter of the present application, computer 400 may comprise the source machine from which data is being migrated, and the remote computer may comprise the destination machine. Note, however, that source and destination machines need not be connected by a network or any other means, but instead, data may be migrated via any media capable of being written by the source platform and read by the destination platform or platforms. When used in a LAN or WLAN networking environment, computer 400 is connected to the LAN through a network interface 496 or an adapter. When used in a WAN networking environment, computer 400 typically includes a modem or other means for establishing communications over the WAN to environments such as the Internet. It will be appreciated that other means of establishing a communications link between the computers may be used.

According to one embodiment, computer 400 is connected in a networking environment such that processor 410 can process incoming and outgoing data. The incoming and outgoing data can be to and/or from a portable device or from another data source, such as another computer.

Note that while this invention has been described in terms of several embodiments, these embodiments are non-limiting (regardless of whether they have been labeled as exemplary or not), and there are alterations, permutations, and equivalents, which fall within the scope of this invention. Additionally, the described embodiments should not be interpreted as mutually exclusive, and should instead be understood as potentially combinable if such combinations are permissive. It should also be noted that there are many alternative ways of implementing the methods and apparatuses of the present invention. It is therefore intended that claims that may follow be interpreted as including all such alterations, permutations, and equivalents as fall within the true spirit and scope of the present invention.

## Claims

1. A method of detecting and/or managing devices in a Device Level Ring (DLR) network, the method comprising the steps of:
identifying a switching device connected to said DLR network that includes a port associated with multiple internet protocol (IP) addresses, each of said multiple IP addresses representing a device;
sending a verification query to at least one of said multiple IP addresses to verify a presence of said DLR network and responsively receiving a first DLR object;
extracting an IP address of an active ring supervisor from said first DLR object;
sending a supervisor query to said IP address of said active ring supervisor and responsively receiving an active ring supervisor DLR object;
reading a participant list and an order of DLR network participants from said active ring supervisor DLR object, said order representing a connection order in which said DLR network participants are connected to a first port of said active ring supervisor; and
providing a visual representation of a logical ring of said DLR network.

2. The method of claim 1, wherein said switching device is one of a switch or a router.

3. The method of claim 1, wherein said verification query is based on a class code of said first DLR object.

4. The method of claim 3, wherein said verification query requests at least one attribute associated with respective said device.

5. The method of claim 1, wherein said presence of said DLR network is associated with said first DLR object being returned in response to said verification query.

6. The method of claim 1, wherein said visual representation illustrates direct links between said DLR network participants, said direct links representing actual physical links between respective said DLR network participants.

7. The method of claim 1, where said participant list includes a respective IP address and a respective MAC address for each of said DLR network participants.

8. The method of claim 7, further comprising the steps of:
sending an identity query to each of said DLR network participant and responsively receiving an identity object, each said identity query being sent to respective said IP address of respective said DLR network participant;
reading at least one of a vendor ID, a device type, and a product code from each of said identity objects; and
providing at least one of said vendor ID, said device type, and said product code with said visual representation of said logical ring of said DLR network, each said at least one of said vendor ID, said device type, and said product code being associated with respective one of said DLR network participants.

9. The method of claim 7, further comprising the steps of:
sending an identity query to each of said DLR network participant and responsively receiving an identity object, each identity query being sent to respective said IP address of respective said DLR network participant;
reading at least one of a vendor ID, a device type, and a product code from each of said identity objects;
correlating said at least one of said vendor ID, said device type, and said product code with a device entry in a database, said device entry including information related to respective said DLR network participant; and
providing a user with said information upon said user's request.

10. The method of claim 9, wherein said information includes a photographic image showing said respective DLR network participant.

11. The method of claim 7, further comprising the steps of:
extracting a switching device MAC table from said switching device;
locating within said switching device MAC table a MAC address of one of said DLR network participants; and
associating said one of said DLR network participants with a point through which said DLR network is connected to at least one of a greater local area network and a wide area network.

12. The method of claim 1, wherein said participant list includes a respective MAC address for each of said DLR network participants, and wherein said method further comprising the steps of:
extracting a first MAC table from a first DLR network participant, said first MAC table mapping a MAC address of each connected DLR network participant to one port of said first DLR network participant;
extracting a second MAC table from a second DLR network participant, said second MAC table mapping a MAC address of each connected DLR network participant to one port of said second DLR network participant, said first and said second DLR network participants being any two DLR network participants that are connected without an intervening DLR network participant; and
indicating a direct connection between said first DLR network participant and said second DLR network participant on said visual representation, said direct connection being indicated between port A on said first DLR network participant and port B on said second DLR network participant, said port A being mapped to said MAC address of said second DLR network participant, said port B being mapped to said MAC address of said first DLR network participant.

13. A method of managing a Device Level Ring (DLR) network with a fault, said DLR network including a plurality of DLR network participants and an active ring supervisor, said active ring supervisor including a first port and a second port, the method comprises the steps of:
sending a supervisor query to an IP address of said active ring supervisor and responsively receiving an active ring supervisor DLR object;
identifying node A, said node A being a last active node on said first port of said active ring supervisor;
identifying node B, said node B being a last active node on said second port of said active ring supervisor; and
providing a visual representation of a logical ring of said DLR network, said visual representation including a depiction of a broken link between said node A and said node B.
